# EUROPÄISCHE PATENTANMELDUNG

(11) **EP 1 130 485 A1**
(43) Veröffentlichungstag der Anmeldung: **05.09.2001**
(21) Anmeldenummer: 00104207.6
(22) Anmeldetag: 01.03.2000
(51) Int. Cl.: G05B 19/12, G05B 19/418

(54) **Sytem und Verfahren zur Überwachung einer Walze mit einem Walzenkern und einem Walzenmantel**

(71) Anmelder: Hilzinger-Gummiwalzen GmbH & Co. KG, 78532 Tuttlingen (DE)
(72) Erfinder: Beier, Wolfgang, 51429 Bergisch-Gladbach (DE)

(57) **Zusammenfassung**

Die Erfindung betrifft ein System zur Überwachung einer Walze 2, 4 mit einem Walzenkern 6 und einem Walzenmantel 8. Das System enthält einen an der Walze befestigten Transponder 12 und eine außerhalb der Walze befindliche Sende-/Empfangseinrichtung 20, mittels der Daten aus einem Speicher des Transponders 12 ausgelesen bzw. in diesen eingeschrieben werden können. Die Daten können beispielsweise Auskunft über die Einsatzdauer der Walze bzw. über Chemikalien geben, gegenüber denen der elastomere Walzenmantel 8 der Walze 2, 4 beständig ist. Gemäß einer Weiterbildung der Erfindung ist der Transponder 12 in den elastomeren Walzenmantel 8 eingebettet und weist einen Sensor auf, mit dessen Hilfe die Temperatur und/oder der Druck in dem elastomeren Walzenmantel 8 erfaßt werden kann.

## Beschreibung

Die Erfindung betrifft ein System zur Überwachung einer Walze mit einem Walzenkern und einem Walzenmantel. Die Erfindung betrifft ferner ein Verfahren zur Überwachung einer solchen Walze.

Walzen mit einem Walzenkern und einem elastomeren Walzenmantel werden weit verbreitet eingesetzt, z. B. im Maschinenbau, in der Textil-, Stahl-, Kunststoff-, Papier-, Verpackungs- und Holzindustrie, sowie in der Textil- und Blechveredelung und in der Papierfabrikation etc. Die Zusammensetzung und die Lebensdauer des elastomeren Walzenmantels ist abhängig von dem gewünschten Einsatz der Walze und den Rahmenbedingungen, denen diese dabei unterworfen ist. Zur Überwachung der Einsatzdauer und der Rahmenbedingungen werden heute beim Endanwender der Walze häufig sogenannte Maschinenbücher geführt, in denen der Lebenslauf der im Betrieb eingesetzten Walzen aufgezeichnet wird. Es ist festzustellen, daß die Führung derartiger Maschinenbücher zum einen aufwendig ist und zum anderen die Gefahr besteht, daß ein in dem Maschinenbuch geführter Lebenslauf versehentlich einer falschen Walze zugeordnet wird und infolgedessen beispielsweise der Austausch einer Walze zu spät vorgenommen wird. Darüber hinaus ist festzustellen, daß mit Hilfe des in dem Maschinenbuch geführten Lebenslaufes der tatsächliche Verschleiß, dem eine Walze unterliegt, nur schlecht oder überhaupt nicht überwacht werden kann.

Der Erfindung liegt die Aufgabe zugrunde, ein System zur Überwachung einer Walze mit einem Walzenkern und einem Walzenmantel zu schaffen, das eine einfache Überwachung einer Walze ermöglicht und in dem eine Verwechslungsgefahr mehrerer Walzen in einem Betrieb weitestgehend ausgeschlossen werden kann. Der Erfindung liegt ferner die Aufgabe zugrunde, ein Verfahren zur Überwachung einer Walze mit einem derartigen System zu schaffen.

Gemäß dem Anspruch 1 wird die Aufgabe dadurch gelöst, daß das System zur Überwachung einer Walze mit einem Walzenkern und einem Walzenmantel folgende Bestandteile enthält:
- mindestens einen an der Walze befestigten Transponder mit einem integriertem Schaltkreis, der einen lesbaren Speicher zur Speicherung von Daten aufweist, und mit einer elektrisch leitfähigen Spule, die leitend mit dem integrierten Schaltkreis verbunden ist
- eine außerhalb der Walze befindlichen Sende-/Empfangseinrichtung, mittels der Daten aus dem Speicher des Transponders auslesbar sind.

Der Speicher ist vorzugsweise so ausgebildet, daß er Daten ohne eine Spannungsversorgung dauerhaft zu speichern vermag, also z. B. als ROM; PROM, EEPROM etc.

Gemäß dem nebengeordneten Anspruch 17 wird die Aufgabe mittels eines derartigen Systems ferner dadurch gelöst, daß die in den Speicher des Transponders eingeschriebenen Daten zumindest zum Teil in zeitlichen Abständen mittels der externen Sende-/Empfangseinrichtung ausgelesen werden.

Bei den in den Transponder eingeschriebenen Daten kann es sich beispielsweise um Daten handeln, die über die Einsatzmöglichkeit der Walze und über die äußeren Einflüsse, denen der elastomere Walzenmantel standhält, Auskunft geben. Beispielsweise können in dem Transponder einer Walze Daten bezüglich der Chemikalien eingeschrieben werden, gegenüber denen der elastomere Walzenmantel beständig ist. Vor dem ersten Einsatz der Walze beim Endanwender können diese Daten mit Hilfe der externen Sende/Empfangseinrichtung aus dem Transponder ausgelesen werden, so daß sichergestellt ist, daß die Walze nur dort eingesetzt wird, wo sie nicht mit Chemikalien in Berührung kommt, gegenüber denen der elastomere Walzenmantel nicht beständig ist.

Die mit der Erfindung erzielten Vorteile sind insbesondere darin zu sehen, daß eine Überwachung der Walze mit Hilfe des an der Walze befestigten Transponders auf einfache Art und Weise möglich ist. Darüber hinaus besteht nicht die Gefahr, daß während des Lebenslaufes einer Walze die zu einer Walze gehörigen Daten versehentlich einer anderen Walze im Betrieb des Endanwenders zugeordnet werden und aufgrund dieser falschen Zuordnung falsche Rückschlüsse, z. B. bezüglich der Beständigkeit des elastomeren Walzenmantels gegenüber bestimmten Chemikalien, gezogen werden. Eine derartige Verwechslung ist ausgeschlossen, weil der Transponder, in dem die relevanten Daten stehen, direkt der Walze zugeordnet ist und mit Hilfe einer externen Sende-/Empfangseinrichtung immer wieder ausgelesen werden kann.

Gemäß einer Weiterbildung der Erfindung nach Anspruch 2 enthält der integrierte Schaltkreis des Transponders einen beschreibbaren Speicher zur Speicherung von Daten, der mittels der externen Sende-/Empfangseinrichtung beschreibbar und auslesbar ist. Bei dem Speicher kann es sich z. B. um einen EEPROM handeln. Der Vorteil dieser Weiterbildung ist darin zu sehen, daß auch beim Endanwender der Walze Daten in den Transponder mittels der externen Sende/Empfangseinrichtung eingeschrieben und wieder ausgelesen werden können. So kann beim Endanwender in den Transponder beispielsweise das erste Einsatzdatum der Walze eingeschrieben werden. Durch regelmäßiges Auslesen dieses Datums aus dem Transponder mittels der externen Sende/Empfangseinrichtung kann berechnet werden, wie lange sich die Walze bereits im Einsatz befindet und ob gegebenenfalls ein Austausch der Walze notwendig ist. Es ist ferner möglich, in den Transponder das Datum einzuschreiben, zu dem die Walze das letzte Mal eingesetzt worden ist, so daß auch noch zu einem beliebigen späteren Zeitpunkt die voraussichtliche Lebensdauer einer Walze unter bestimmten Rahmenbedingungen ermittelt werden kann.

Gemäß einem Ausführungsbeispiel der Erfindung nach Anspruch 3 ist der Transponder in der Stirnseite des Walzenkerns befestigt. Bevorzugt weist der Transponder dann die Form eines Stiftes auf, der weitestgehend in axialer Richtung des Walzenkerns verläuft, so wie es in Anspruch 4 beansprucht ist. Der Vorteil dieses Ausführungsbeispiels ist darin zu sehen, daß der Transponder auf besonders einfache Art und Weise sicher an der Walze befestigt ist. Darüber hinaus befindet sich kein "Fremdkörper" im elastomeren Walzenmantel, der insbesondere bei dünnen und weichen Walzenmänteln hinderlich sein könnte. Ein weiterer Vorteil dieses Ausführungsbeispiels ist darin zu sehen, daß der Walzenkern und somit der Transponder und die in ihm enthaltenen Daten immer erhalten bleibt, wohingegen der elastomere Walzenmantel einer Walze in zeitlichen Abständen getauscht wird.

Gemäß einem weiteren Ausführungsbeispiel der Erfindung nach Anspruch 5 ist der Transponder in den Walzenmantel eingebettet. Es hat sich gezeigt, daß die Einbettung eines Transponders in den Walzenmantel ohne Probleme möglich ist, wenn der elastomere Walzenmantel eine Shorehärte von mindestens 50 bis 90 Shore und eine Dicke von mindestens 8 mm bis 25 mm aufweist. Vorzugsweise wird der Transponder bereits während der Herstellung des elastomeren Walzenmantels derart in diesen eingebettet, daß er allseitig von dem elastomeren Material umgeben ist. Der Transponder ist dann einerseits gut vor den mechanischen Belastungen geschützt, die im täglichen Gebrauch der Walze auf den elastomeren Walzenmantel einwirken, und stellt andererseits keinen störenden Fremdkörper im elastomeren Walzenmantel dar.

Gemäß einer Weiterbildung dieses Ausführungsbeispieles nach Anspruch 6 steht der integrierte Schaltkreis des Transponders über einen Analog-/Digitalwandler mit mindestens einem in den Walzenmantel eingebetteten Sensor, insbesondere einem Temperatursensor und/oder einem Drucksensor in Verbindung, dessen Meßdaten in einen beschreibbaren Speicher des Transponders einschreibbar sind. Die in den Speicher des Transponders eingeschriebenen Meßdaten werden in zeitlichen Abständen von der externen Sende-/Empfangseinrichtung ausgelesen und ausgewertet. Ergibt die Auswertung, daß bestimmte Temperatur bzw. Druckwerte in dem elastomeren Walzenmantel der Walze überschritten worden sind, so können entsprechende Maßnahmen, z. B. die Stillsetzung der Walze, eingeleitet werden. Die mit der Weiterbildung erzielten Vorteile sind insbesondere darin zu sehen, daß eine aktive Temperatur- und Drucküberwachung des elastomeren Walzenmantels mit Hilfe der Transponder möglich ist. Eine derartige aktive Temperatur und Drucküberwachung ist besonders wichtig, da ein zu hoher Druck und eine zu hohe Temperatur die Lebensdauer eines elastomeren Walzenmantels erheblich verringern können und ist darüber hinaus insbesondere für die Textil- und Papierindustrie vorteilhaft, da deren Produkte besonders empfindlich auf zu hohe Drücke und Temperaturen reagieren.

Gemäß einer Weiterbildung der Erfindung nach Anspruch 7 sind mindestens zwei mit jeweils einem Temperatur- oder Drucksensor gekoppelte Transponder in den Walzenmantel eingebettet, deren Verbindungsgrade weitestgehend parallel zur Achse des Walzenkerns verläuft. Der Vorteil dieser Weiterbildung ist darin zu sehen, daß mit Hilfe der beiden in den Walzenmantel eingebetteten Transponder festgestellt werden kann, ob die Walze, insbesondere der elastomere Walzenmantel, über ihre gesamte Länge gleichmäßig belastet wird oder aber ob die Walze "schief" läuft und aufgrund dessen eine ungleichmäßige Belastung über ihre Länge gegeben ist. Im ersten Fall liegen im Bereich beider Transponder nahezu die gleichen Druck- bzw. Temperaturwerte vor, wohingegen im zweiten Fall sich die entsprechenden Werte deutlich unterscheiden.

Gemäß einer Weiterbildung nach Anspruch 8 sind entlang mindestens einer Umfangslinie des Walzenmantels mindestens zwei jeweils mit einem Temperatur- oder Drucksensor gekoppelte Transponder in den Walzenmantel eingebettet. Der Vorteil dieser Weiterbildung ist darin zu sehen, daß man mit Hilfe der beiden Transponder feststellen kann, ob die Walze exzentrisch läuft. In diesem Fall werden von den beiden auf einer Umfangslinie des Walzenmantels liegenden Temperatur- oder Drucksensoren unterschiedliche Druck- bzw. Temperaturwerte gemessen und registriert, wohingegen bei einem zentrischen Lauf der Walze beide Sensoren weitestgehend übereinstimmende Werte messen und registrieren.

Weitere Vorteile und ein Ausführungsbeispiel der Erfindung werden im Zusammenhang mit den nachstehenden Figuren erläutert, darin zeigt:
- Fig. 1: ein System zur Überwachung einer Walze in schematischer Darstellung,
- Fig. 2: einen Transponder,
- Fig. 3: ein System zur Überwachung einer Walze in schematischer Darstellung,
- Fig. 4: einen Transponder.

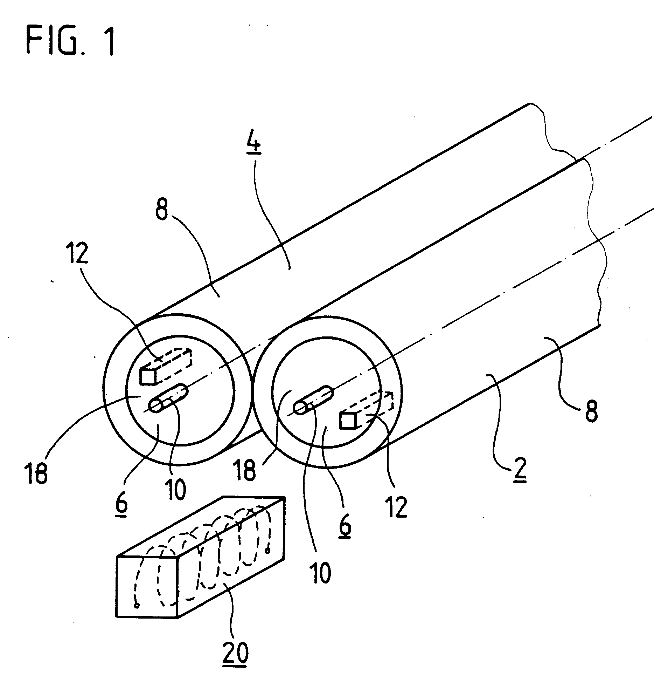

Figur 1 zeigt in schematischer Darstellung ein System zur Überwachung einer Walze 2 und einer Gegendruckwalze 4. Sowohl die Walze 2 als auch die Gegendruckwalze 4 weist einen Walzenkern 6 und einen elastomeren Walzenmantel 8 auf und ist über Bolzen 10 in (nicht gezeigten) Lagern gelagert. In jeder Stirnseite des Walzenkerns 6 ist ein Transponder 12 befestigt, der die Form eines Stiftes aufweist, dessen Längsachse weitestgehend in axialer Richtung des Walzenkerns verläuft.

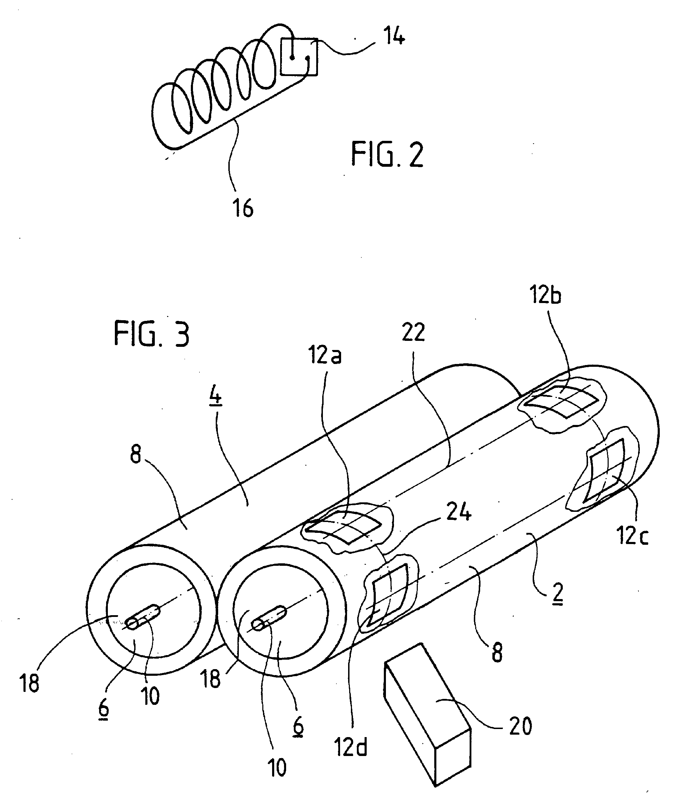

Figur 2 zeigt in schematischer Darstellung den inneren Aufbau des Transponders 12. Der Transponder 12 weist einen integrierten Schaltkreis 14 auf, der elektrisch leitend mit einer elektrisch leitfähigen Spule 16 verbunden ist. Die Spulenwicklungen der Spule 16 sind in dem Gehäuse des Transponders 12 parallel zu der Stirnfläche 18 des Walzenkerns 6 ausgerichtet. Der integrierte Schaltkreis 14 weist u.a. einen Speicher auf, der ohne Spannungsversorgung Daten speichern kann und der sowohl lesbar als auch beschreibbar ist (also z. B. einen EEPROM). Bereits beim Walzenhersteller können in den Speicher Daten eingeschrieben werden, z. B. bezüglich der Chemikalien, gegenüber denen der elastomere Walzenmantel 8 der Walze 2 bzw. der Gegendruckwalze 4 beständig ist.

Die in den Speicher des integrierten Schaltkreises 14 eingeschriebenen Daten sind mittels einer außerhalb der Walze befindlichen Sende-/Empfangseinrichtung 20 (s. Figur 1) aus dem Speicher auslesbar. Diese verfügt dazu über eine als Primärspule wirkende elektrisch leitfähige Spule 22, mit Hilfe der ein elektromagnetisches Feld erzeugbar ist. Der Transponder 12 wird durch induktive Kopplung mit Spannung bzw. mit Strom versorgt, wenn von der Spule 22 ein elektromagnetisches Feld erzeugt wird, und es können dann Daten aus dem Speicher des integrierten Schaltkreises 14 des Transponders 12 ausgelesen werden. Dabei wird das Datensignal der Frequenz bzw. der Amplitude des elektromagnetischen Feldes aufmoduliert.

Mit Hilfe der Sende-/Empfangseinrichtung 20 können auf die gleiche Art und Weise auch Daten in den Speicher des integrierten Schaltkreises 14 eingeschrieben werden, z. B. bezüglich des ersten bzw. letzten Einsatzdatums der Walze 2 bzw. der Gegendruckwalze 4. Das Auslesen und Einschreiben von Daten aus dem Speicher des integrierten Schaltkreises 14 durch die Sende/Empfangseinrichtung 20 ist sowohl bei ruhender als auch bei rotierender Walze 2 bzw. Gegendruckwalze 4 möglich. Bei der Sende-/Empfangseinrichtung 20 kann es sich sowohl um eine ortsfeste Vorrichtung als auch um ein Handgerät handeln.

Figur 3 zeigt in schematischer Darstellung ein weiteres Überwachungssystem einer Walze 2 und einer Gegendruckwalze 4. Walze 2 und Gegendruckwalze 4 weisen den gleichen Aufbau wie die in der Figur 1 gezeigten Walzen auf, so daß diesbezüglich auf die dazugehörige Figurenbeschreibung verwiesen wird. In den elastomeren Walzenmantel 8 sind mehrere Transponder 12a bis 12d eingebettet. Die Transponder 12a und 12b liegen (möglichst weit voneinander beabstandet) auf einer Verbindungsgeraden 22, die weitestgehend parallel zur Achse des Walzenkerns verläuft. Die Transponder 12a und 12d bzw. 12b und 12c liegen (bevorzugt ebenfalls möglichst weit voneinander entfernt) auf einer Umfangslinie des Walzenmantels 8.

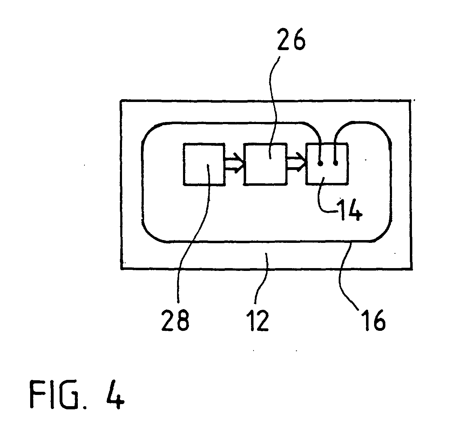

Figur 4 zeigt den Aufbau der in der Figur 3 gezeigten Transponder 12a bis 12d. Jeder der Transponder 12a bis 12d verfügt über einen integrierten Schaltkreis 14, der elektrisch leitend mit einer elektrisch leitfähigen Spule 16 verbunden ist und über einen auslesbaren und beschreibbaren Speicher, z. B. einen EEPROM, verfügt. Der integrierte Schaltkreis 14 des Transponders 12 steht über einen Analog-/Digitalwandler 26 mit einem Sensor 28, insbesondere einem Temperatursensor 28 oder einem Drucksensor 28 in Verbindung. Die von dem Sensor 28 erfaßten analogen Daten werden in dem Analog-/Digitalwandler 26 in digitale Daten umgewandelt und in den Speicher des integrierten Schaltkreises 14 eingeschrieben. Zu einem späteren Zeitpunkt können die in den Speicher eingeschriebenen Daten von der außerhalb der Walze befindlichen Sendeempfangseinrichtung 20 (s. Figur 3) ausgelesen und ausgewertet werden.

Im folgenden wird erläutert, wie mit Hilfe der Transponder 12a und 12b bzw. 12c und 12d festgestellt werden kann, ob die Walze 2 zu der Gegendruckwalze 4 parallel ausgerichtet ist oder aber ab sie gegenüber dieser schiefläuft: In die Speicher der Transponder 12a und 12b werden in zeitlichen Abständen die von den Temperatursensoren 28 erfaßten Temperaturwerte eingeschrieben. Die in den Speicher eingeschriebenen Daten werden in zeitlichen Abständen mit Hilfe der Sendeempfangseinrichtung 20 ausgelesen und ausgewertet. Läuft die Walze 2 gegenüber der Gegendruckwalze 4 schief, so führt dies dazu, daß in einem Endbereich der Walze 2 der Anpreßdruck an die Gegendruckwalze 4 größer als im anderen Endbereich der Walze 2. In dem Endbereich, in dem der Anpreßdruck größer ist, kommt es infolgedessen zu einem stärkeren Temperaturanstieg des elastomeren Walzenmantels 8 als in dem anderen Endbereich. Dementsprechend werden von dem Temperatursensor 28, der in dem entsprechenden Endbereich liegt, höhere Temperaturwerte gemessen und in dem ihm zugeordneten Transponder 12 eingeschrieben. Werden also von der Sende-/Empfangseinrichtung 20 aus dem Transponder 12a höhere Temperaturwerte ausgelesen als aus dem Transponder 12b, so ist dies ein Anzeichen dafür, daß die Walze 2 gegenüber der Gegendruckwalze 4 schiefläuft und der Endbereich, in dem der Transponder 12a liegt, näher an der Gegendruckwalze 4 liegt, als der Endbereich, in dem der Transponder 12b liegt. Werden hingegen aus beiden Transpondern weitestgehend gleiche Temperaturwerte ausgelesen, so kann ein Schieflauf der Walze 2 gegenüber der Gegendruckwalze 4 ausgeschlossen werden.

Im folgenden wird erläutert, wie mit Hilfe der Transponder 12a und 12d bzw. 12b und 12c festgestellt werden kann, ob die Walze 2 gegenüber der Gegendruckwalze 4 exzentrisch läuft: Mit Hilfe des Temperatursensors 28 des Transponders 12a und des Transponders 12d werden in zeitlichen Abständen die Temperaturen im Bereich der Transponder 12a bzw. Transponder 12d erfaßt und in den Speicher des integrierten Schaltkreises 14 eingeschrieben. Die in den Speicher eingeschriebenen Daten werden in zeitlichen Abständen mit Hilfe der Sende-/Empfangseinrichtung 20 ausgelesen und ausgewertet. Liegen in dem Transponder 12a höhere Temperaturwerte vor als in dem Transponder 12d, so ist dies ein Anzeichen dafür, daß der elastomere Walzenmantel 8 im Bereich des Transponders 12a höheren Drücken ausgesetzt ist und demzufolge stärker erwärmt wird als im Bereich des Transponders 12d. Demzufolge weist die Walze 2 eine Unwucht auf. Eine Unwucht der Walze 2 kann nur ausgeschlossen werden, wenn die Auswertung der Temperaturdaten ergibt, daß in beiden Transpondern 12a und 12d weitestgehend die gleichen Daten gemessen worden sind. Anstelle der Temperatur kann mit Hilfe von Drucksensoren auch der Druck erfaßt und entsprechend ausgewertet werden.

Selbstverständlich können genauere Aussagen über einen Schieflauf bzw. eine Unwucht der Walze 2 getroffen werden, wenn entlang der Verbindungsgeraden 2 bzw. entlang der Umfangslinie 24 mehr als zwei Transponder verteilt sind.

### Bezugszeichenliste

- 2: Walze
- 4: Gegendruckwalze
- 6: Walzenkern
- 8: elastomerer Walzenmantel
- 10: Bolzen
- 12: Transponder
- 14: integrierter Schaltkreis
- 16: Spule
- 18: Stirnfläche
- 20: Sende-/Empfangseinrichtung
- 22: Verbindungsgerade
- 24: Umfangslinie
- 26: Analog-/Digital Wandler
- 28: Sensor

## Patentansprüche

1. System zur Überwachung einer Walze (2, 4) mit einem Walzenkern (6) und einem Walzenmantel (8), das folgende Bestandteile enthält:
- mindestens einen an der Walze (2, 4) befestigten Transponder (12) mit einem integrierten Schaltkreis (14), der einen lesbaren Speicher zur Speicherung von Daten aufweist, und mit einer elektrisch leitfähigen Spule (16), die elektrisch leitend mit dem integrierten Schaltkreis (14) verbunden ist
- eine außerhalb der Walze (2, 4) befindliche Sende-/Empfangseinrichtung (20), mittels der Daten aus dem Speicher des Transponders (12) auslesbar sind.

2. System zur Überwachung einer Walze (2, 4) nach Anspruch 1, **dadurch gekennzeichnet**, daß der integrierte Schaltkreis (14) des Transponders (12) einen beschreibbaren Speicher zur Speicherung von Daten enthält, der mittels der externen Sende-/Empfangseinrichtung (20) beschreibbar und auslesbar ist.

3. System zur Überwachung einer Walze (2, 4) nach einem der Ansprüche 1 bis 2, **dadurch gekennzeichnet**, daß der Transponder (12) in einer Stirnfläche (18) des Walzenkerns (6) befestigt ist.

4. System zur Überwachung einer Walze (2, 4) nach Anspruch 3, daduch gekennzeichnet, daß der Transponder (12) die Form eines Stiftes aufweist, der weitestgehend in axialer Richtung des Walzenkerns (6) verläuft.

5. System zur Überwachung einer Walze (2, 4) nach einem der Ansprüche 1 bis 2, **dadurch gekennzeichnet**, daß der Transponder (12) in den Walzenmantel (8) eingebettet ist.

6. System zur Überwachung einer Walze (2, 4) nach Anspruch 5, **dadurch gekennzeichnet**, daß der integrierte Schaltkreis des Transponders (12) über einen Analog-/Digitalwandler (26) mit mindestens einem in den Walzenmantel (8) eingebetteten Sensor (28), insbesondere einem Temperatursensor und/oder einem Drucksensor, in Verbindung steht, dessen Meßdaten in einen beschreibbaren Speicher des Transponders (12) einschreibbar sind.

7. System zur Überwachung einer Walze (2, 4) nach Anspruch 6, **dadurch gekennzeichnet**, daß mindestens zwei mit jeweils einem Temperatur- oder Drucksensor (28) gekoppelte Transponder (12) in den Walzenmantel (8) eingebettet sind, deren Verbindungsgerade weitestgehend parallel zur Achse des Walzenkerns (6) verläuft.

8. System zur Überwachung einer Walze (2, 4) nach Anspruch 6, **dadurch gekennzeichnet**, daß entlang mindestens einer Umfangslinie (24) des Walzenmantels (8) mindestens zwei jeweils mit einem Temperatur- oder Drucksensor (28) gekoppelte Transponder (12) in den Walzenmantel (8) eingebettet sind.

9. Walze (2, 4) mit einem Walzenkern (6) und einem Walzenmantel (8), die mindestens einen an der Walze befestigten Transponder (12) mit einem integriertem Schaltkreis (14), der einen lesbaren Speicher zur Speicherung von Daten aufweist, und mit einer elektrisch leitfähigen Spule (16), die elektrisch leitend mit dem integriertem Schaltkreis (14) verbunden ist, enthält.

10. Walze (2, 4) nach Anspruch 9, **dadurch gekennzeichnet**, daß der integrierte Schaltkreis (14) des Transponders (12) einen beschreibbaren Speicher zur Speicherung von Daten enthält.

11. Walze (2, 4) nach einem der Ansprüche 9 bis 10, **dadurch gekennzeichnet**, daß der Transponder (12) in einer Stirnfläche (18) des Walzenkerns (6) befestigt ist.

12. Walze (2, 4) nach Anspruch 11, **dadurch gekennzeichnet**, daß der Transponder (12) die Form eines Stiftes aufweist, der weitestgehend in axialer Richtung des Walzenkerns (6) verläuft.

13. Walze (2, 4) nach einem der Ansprüche 9 bis 10, **dadurch gekennzeichnet**, daß der Transponder (12) in den Walzenmantel (8) eingebettet ist.

14. Walze (2, 4) nach Anspruch 13, **dadurch gekennzeichnet**, daß der integrierte Schaltkreis (14) des Transponders (12) über einen Analog-/Digitalwandler (26) mit mindestens einem in den Walzenmantel (8) eingebetteten Sensor (28), insbesondere einem Temperatursensor (28) und/oder einem Drucksensor (28) in Verbindung steht, dessen Meßdaten in einen beschreibbaren Speicher des Transponders (12) einschreibbar sind.

15. Walze (2, 4) nach Anspruch 14, **dadurch gekennzeichnet**, daß mindestens zwei mit jeweils einem Temperatur- oder Drucksensor (28) gekoppelte Transponder (12) in den Walzenmantel (8) eingebettet sind, deren Verbindungsgerade (22) weitestgehend parallel zur Achse des Walzenkerns (6) verläuft.

16. Walze (2, 4) nach Anspruch 14, **dadurch gekennzeichnet**, daß entlang mindestens einer Umfangslinie (24) des Walzenmantels (8) mindestens zwei mit jeweils einem Temperatur- oder Drucksensor (28) gekoppelte Transponder (12) in den Walzenmantel eingebettet sind.

17. Verfahren zur Überwachung einer Walze (2, 4) mit einem Walzenkern (6) und einem Walzenmantel (8), mittels eines Systems, das folgende Bestandteile enthält:
- mindestens einen an der Walze (2, 4) befestigten Transponder (12) mit einem integrierten Schaltkreis (14), der einen lesbaren Speicher zur Speicherung von Daten aufweist, und mit einer elektrisch leitfähigen Spule (16), die elektrisch leitend mit dem integrierten Schaltkreis (14) verbunden ist
- eine außerhalb der Walze (2, 4) befindliche Sende-/Empfangseinrichtung (20), mittels der Daten aus dem Speicher des Transponders (12) auslesbar sind,
durch folgenden Verfahrensschritt:
- die in den Speicher des Transponders (12) eingeschriebenen Daten werden zumindest zum Teil in zeitlichen Abständen mittels der externen Sende-/Empfangseinrichtung ausgelesen.

18. Verfahren zur Überwachung einer Walze (2, 4) nach Anspruch 17, **dadurch gekennzeichnet**, daß der integrierte Schaltkreis (14) des Transponders (12) einen beschreibbaren Speicher zur Speicherung von Daten enthält, der mittels der externen Sende-/Empfangseinrichtung in zeitlichen Abständen beschrieben und/oder ausgelesen wird.

19. Verfahren zur Überwachung einer Walze (2, 4) nach einem der Ansprüche 17 bis 18, **dadurch gekennzeichnet**, daß
- der Transponder (12) in den Walzenmantel (8) eingebettet ist und daß
- der integrierte Schaltkreis (14) des Transponders (12) über einen Analog/Digitalwandler (26) mit mindestens einem in den Walzenmantel (8) eingebetteten Sensor, insbesondere einem Temperatursensor (28) und/oder einem Drucksensor (28), in Verbindung steht, und daß
- die Meßdaten des Sensors (28) in einen beschreibbaren Speicher des Transponders eingeschrieben werden und daß
- die in dem Speicher eingeschriebenen Meßdaten in zeitlichen Abständen mittels der externen Sende-/Empfangseinrichtung (20) ausgelesen werden.
